# EUROPEAN PATENT SPECIFICATION

(11) **EP 3 566 002 B1**
(45) Date of publication and mention of the grant of the patent: **16.09.2020**
(21) Application number: 18747889.6
(22) Date of filing: 24.01.2018
(51) Int. Cl.: F21S 8/04, F21V 21/03, F21V 3/02, F21S 8/02, F21V 31/00, F21Y 103/33, F21Y 115/10

(54) **LOW-PROFILE LED LIGHT FIXTURE**
FLACHE LED-LEUCHTE
APPAREIL D'ÉCLAIRAGE À DEL COMPACT

(30) Priority: 31.01.2017 US 201715420930
(43) Date of publication of application: 13.11.2019
(73) Proprietor: Global Product Sources, LLC, Madison, TN 37115-3932 (US)
(72) Inventor: LEE, Jeremy David, Madison, TN 37115-3932 (US); LAWRENCE, Brent Lynn, Madison, TN 37115-3932 (US)
(74) Representative: Hutchins, Michael Richard
(86) International application number: PCT/US2018/014934
(87) International publication number: WO 2018/144272

(56) References cited:
- NL-C2- 1 025 177
- US-A- 4 809 142
- US-A1- 2005 152 128
- US-A1- 2014 056 026
- US-A1- 2015 043 223
- US-A1- 2015 085 466
- US-A1- 2016 356 462
- US-A1- 2016 356 462
- US-B1- 7 753 556
- US-B1- 9 249 966

## Description

### FIELD

This invention relates to the field of lighting. More particularly, this invention relates to a low-profile LED light fixture.

### BACKGROUND

Generally there are four basic types of chicken houses. A broiler house houses chicks from one day old through seven weeks, where they are fed and then processed for meat. A pullet house houses chicks from three days old until they begin laying eggs, after which they are delivered to breeders. A breeder house is where mature chickens lay eggs to supply chicks for the broiler houses. A layer house is where mature chickens lay eggs for consumption.

Lighting has been a constant challenge in chicken houses. Dust, moisture, and chemical exposure affect the consistency of light and the life of bulbs. Chicken houses are typically cooled by large fans that create excessive amounts of dust. Dust on light sources causes a decrease in light intensity on the ground surface. Growers using bulb-type lighting must spend resources to manually clean bulbs at the end of each grow-out cycle. Also, light levels need to be consistently varied at different times during the day and throughout the life cycle to reduce stress levels, thereby controlling the chicken's attitude and appetite which enhances their growth.

LED light bulbs have been used recently in chicken houses to save energy and improve light conditions. However, there are unique problems with LED bulbs, including flicker during the dimming process, moisture incursion, collection of dust, fragility, and high turnover rates.

NL1025177 describes a light comprises a light fitting for connecting the light to a power cable and a mounting device for securing the fitting inside a built-in box connected to power cable wires located in or against a wall. US 4,809,142 and US 2016/356462 A1 describe further prior art lighting devices.

What is needed, therefore, is a reliable, flicker-free, waterproof, and robust LED lighting fixture for use in chicken houses.

### SUMMARY

The above and other needs are met by a light fixture according to claim 1 configured for attachment to a standard ceiling fixture junction box. The light fixture includes a metal base having a hole pattern that matches a mounting screw hole pattern of the standard ceiling fixture junction box. A printed circuit board is attached to a bottom surface the metal base, and a circular array of LEDs is attached to an outer perimeter of the printed circuit board. A domed cover is attached to the bottom surface of the metal base that covers the printed circuit board and the circular array of LEDs. The domed cover is molded from clear plastic through which light from the LEDs may pass.

In some preferred embodiments, the light fixture includes power terminal wires extending from the top surface of the metal base that connect to standard AC power cable wires.

According to the invention, the domed cover includes apertures that are aligned with the hole pattern in the metal base. The apertures receive mounting screws that attach the light fixture to the standard ceiling fixture junction box.

In some preferred embodiments, the domed cover includes a translucent ring portion disposed over the circular array of LEDs for providing improved dispersal of light from the LEDs.

### BRIEF DESCRIPTION OF THE DRAWINGS

Other embodiments of the invention will become apparent by reference to the detailed description in conjunction with the figures, wherein elements are not to scale so as to more clearly show the details, wherein like reference numbers indicate like elements throughout the several views, and wherein:

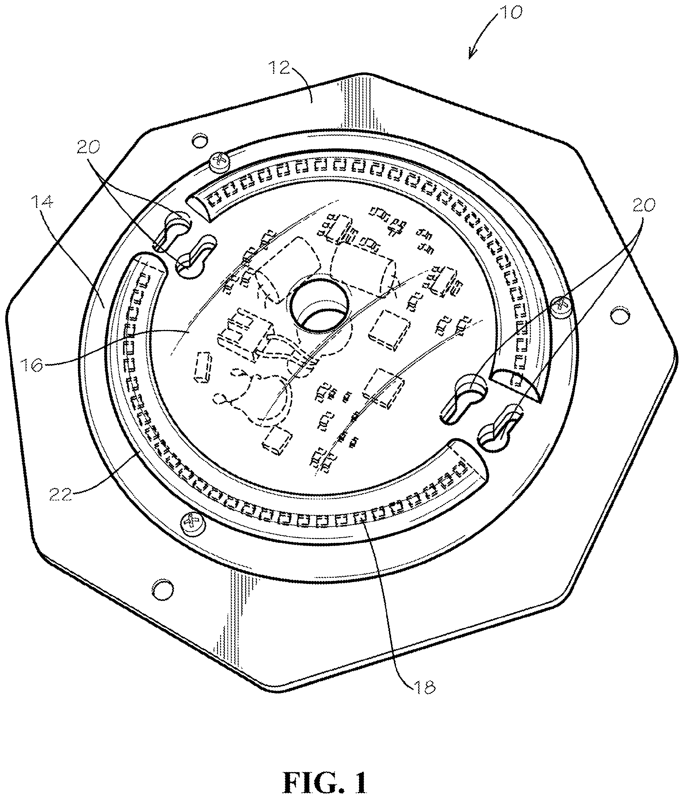

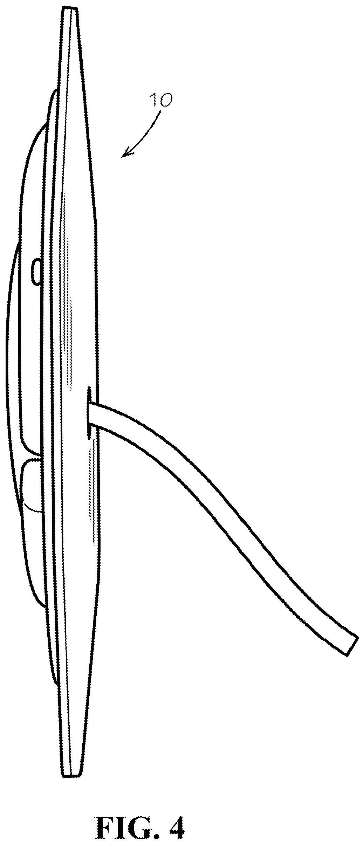

FIGS. 1-4 depict a low-profile light fixture according to an embodiment of the invention;

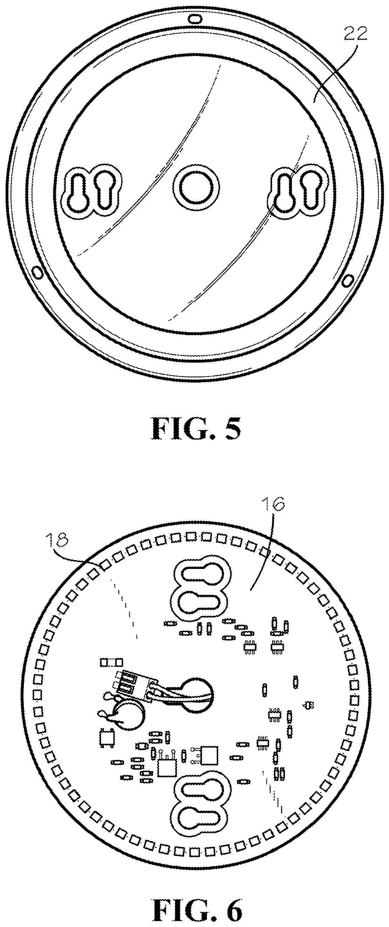

FIG. 5 depicts a domed cover of the low-profile light fixture that is removed from the fixture;
FIG. 6 depicts a printed circuit board and array of LEDs of the low-profile light fixture with the domed cover removed; and
FIGS. 7-9 depict a low-profile light fixture according to a preferred embodiment.

### DETAILED DESCRIPTION

The figures depict an LED light fixture 10 designed to be installed to a standard ceiling light fixture junction box. The light fixture replaces standard fixtures that receive screw-in bulbs, thereby lowering the overall profile. The low-profile fixture 10 is waterproof, dustproof and chemical-proof. The low-profile aspect of the fixture provides for low levels of dust collection and easy cleaning. The fixture 10 includes two or four mounting holes 20 to match mounting screw hole patterns of standard ceiling junction boxes. A preferred embodiment includes two mounting holes 20 for attaching to the most common hole pattern for ceiling junction boxes.

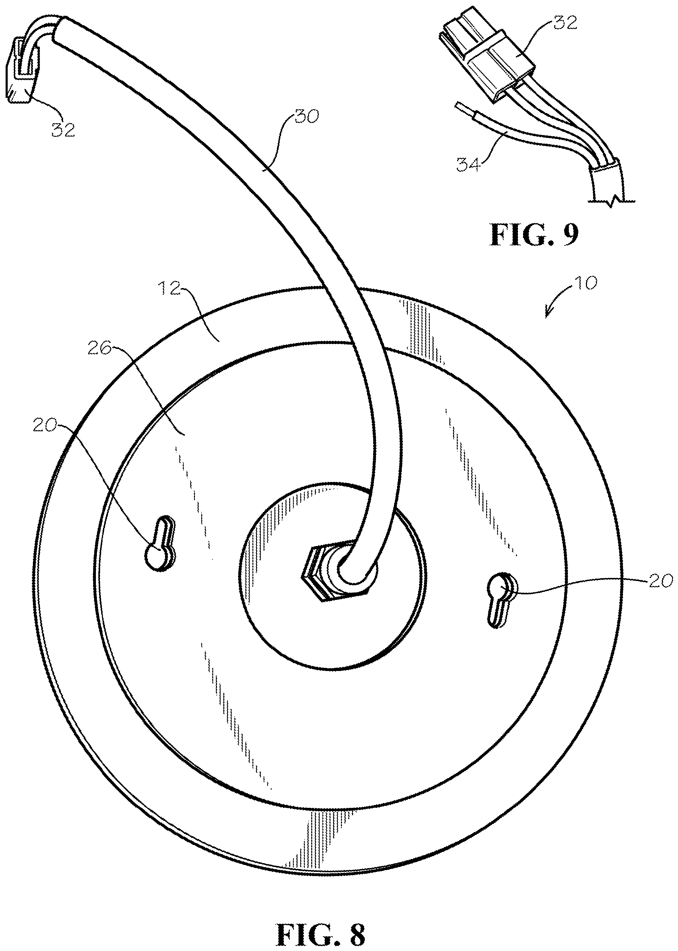

Preferred embodiments of the fixture include a large aluminum base 12 on which a printed circuit board (PCB) 16 is mounted. While also serving as a mounting structure, the base 12 dissipates heat away from the PCB, thereby extending the life of the LEDs. As shown in FIG. 8, preferred embodiments include a UL-listed EPDM rubber washer 26 on the top surface of the base 12 to provide a water-tight seal between the base 12 and the junction box to which it attaches. In various embodiments, the outer perimeter of the base 12 is octagonal or circular, and is preferably circular to maximize the heat dissipation area.

The LEDs are arranged on the PCB 16 in a circular array 18. In one embodiment of the fixture 10, there are fifty-six LEDs in the array 18. A driver-on-board (DOB) control circuit on the PCB 16 controls the operation of the LEDs. The LED array preferably comprises surface mounted diode (SMD) LED chips having model number SMD 2835. Although the array of LEDs 18 is circular according to the invention, other geometries for the array could be used, such as rectangular or octagonal.

Due to the brightness of these LEDs, each fixture 10 can provide up to five foot candles at ground level over a 400 square foot area, or ten foot candles over a 200 square foot area, and dimmable to zero foot/candles. Thus, the fixtures 10 can be placed on 20-foot centers on the ceiling of the chicken house, each having a 30-foot wide footprint, thereby providing wall-to-wall lighting coverage over 360 degrees with substantially no shadows. By comparison, standard LED bulbs must be placed on 10-foot centers.

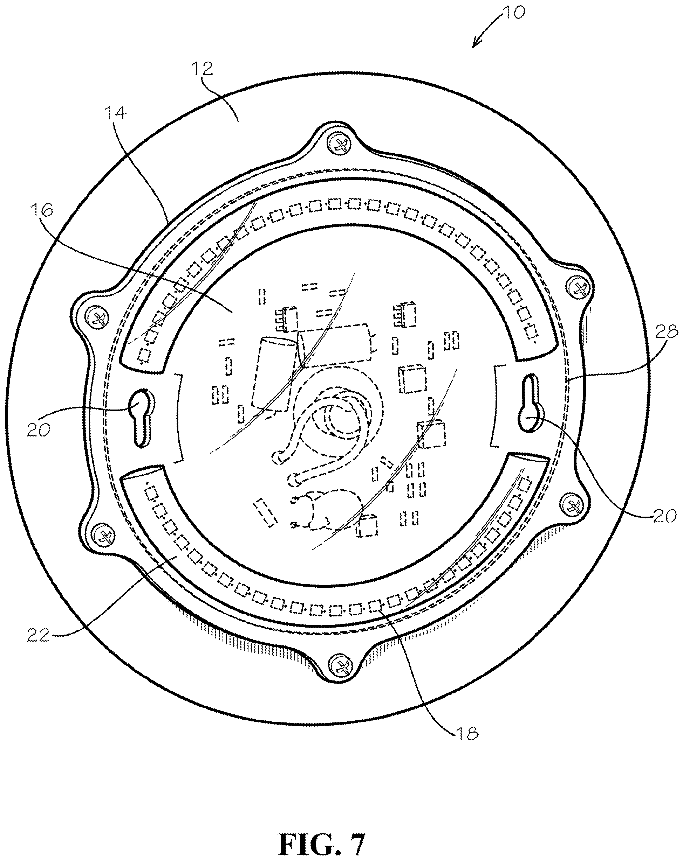

A domed cover 14 is attached to the bottom surface of the base 12 and covers the PCB 16 and the circular array 18 of LEDs. The domed cover 14 is molded from clear plastic through which light from the LEDs may pass. A plurality of screws, such as three or six, may be used to fasten the domed cover 14 to the base 12. To provide a waterproof and dustproof seal, an annular waterproof gasket 28 is disposed between the domed cover 14 and the base 12, as shown in FIG. 7. In preferred embodiments, the domed cover includes a translucent ring portion 22 disposed over the circular array 18 of LEDs for providing improved dispersal of light from the LEDs.

Preferred embodiments of the fixture have the following features:
- 25 Watt power consumption
- Operable with dimmer switches with no flicker
- 3000K color temperature
- 2125 lumens
- 120V/AC supply voltage
- 5 foot candles at ground level, dimmable to less than 0.25 foot candles
- 10 year expected lifetime

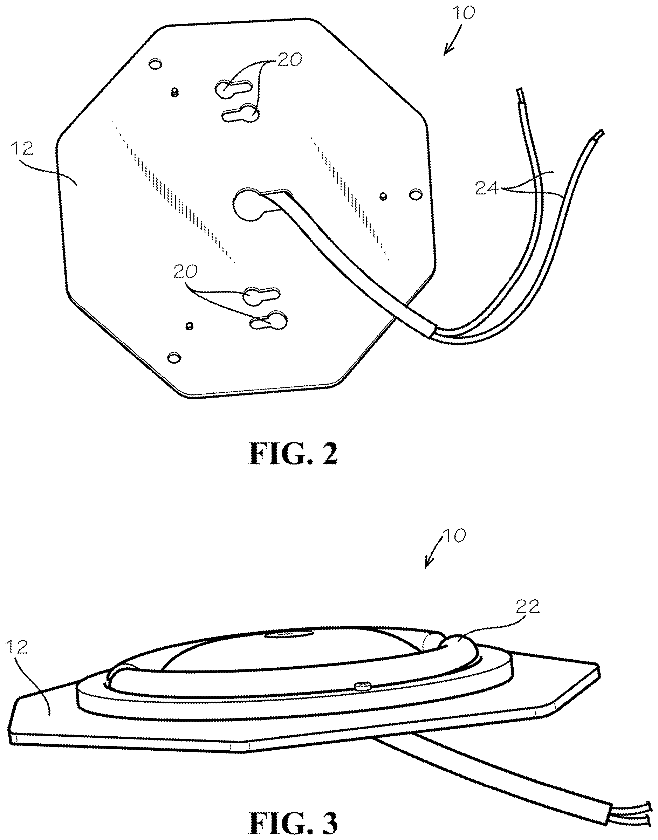

In a preferred embodiment, power terminal wires 24 extend through an aperture in the top surface of the metal base 12 for connecting to standard AC power cable wires in a ceiling junction box (FIG. 2). As shown in FIG. 8, to provide an environmental seal, the power terminal wires 24 are preferably disposed in a dust-tight and waterproof wire harness 30 (IP65 rated). In a preferred embodiment, the wire harness 30 includes a quick-disconnect connector 32 as shown in FIGS. 8 and 9, so that the light fixture 10 can be easily removed and replaced by a non-electrician. Preferred embodiments also include a ground wire 34 for Energy Star certification.

## Claims

1. A light fixture (10) configured for attachment to a standard ceiling fixture junction box, the light fixture comprising:
a metal base (12) having a hole pattern that matches a mounting screw hole pattern of the standard ceiling fixture junction box;
a printed circuit board (16) attached to a bottom surface of the metal base;
a circular array of LEDs (18) attached to an outer perimeter of the printed circuit board; and
a domed
cover (14) attached to the bottom surface of the metal base (12) and covering the printed circuit board (16) and the circular array of LEDs (18), the domed
cover (14) molded from clear plastic through which light from the LEDs may pass, the domed
cover (14) including apertures therethrough that are aligned with the hole pattern in the metal base (12), the apertures for receiving mounting screws that attach the light fixture to the standard ceiling fixture junction box.

2. The light fixture of Claim 1 further comprising power terminal wires (24) extending from the top surface of the metal base (12), the power terminal wires for connecting to AC power cable wires.

3. The light fixture of Claim 2 further comprising a quick-disconnect connector (32) attached to the power terminal wires (24).

4. The light fixture of Claim 1 wherein the domed cover (14) includes a translucent ring portion (22) disposed over the circular array of LEDs (18) for providing improved dispersal of light from the LEDs.

5. The light fixture of Claim 1 further comprising a watertight gasket (28) disposed between the metal base (12) and the domed cover (14).

6. The light fixture of Claim 1 wherein the metal base (12) is circular.

## Patentansprüche

1. Beleuchtungskörper (10), der zur Anbringung an einer Standard-Deckenleuchten-Anschlussdose konfiguriert ist, wobei der Beleuchtungskörper umfasst:
eine Metallbasis (12), die ein Lochmuster aufweist, das mit einem Befestigungsschrauben-Lochmuster der Standard-Deckenleuchten-Anschlussdose übereinstimmt;
eine Leiterplatte (16), die an einer Unterseite der Metallbasis angebracht ist; eine kreisförmige Anordnung von LEDs (18), die an einem Außenumfang der Leiterplatte angebracht sind; und eine gewölbte
Abdeckung (14), die an der Unterseite der Metallbasis (12) angebracht ist und die Leiterplatte (16) und die kreisförmige Anordnung von LEDs (18) abdeckt, wobei die gewölbte Abdeckung (14) aus klarem Kunststoff geformt ist, durch welches Licht von den LEDs hindurchdringen kann, wobei die gewölbte Abdeckung (14) Öffnungen dadurch umfasst, die an dem Lochmuster in der Metallbasis (12) ausgerichtet sind, wobei die Öffnungen zum Aufnehmen von Befestigungsschrauben sind, die den Beleuchtungskörper an der Standard-Deckenleuchten-Anschlussdose befestigen.

2. Beleuchtungskörper nach Anspruch 1, ferner umfassend Stromanschlussdrähte (24), die sich von der Oberseite der Metallbasis (12) erstrecken, wobei die Stromanschlussdrähte zum Verbinden mit Wechselstromkabeldrähten sind.

3. Beleuchtungskörper nach Anspruch 2, ferner umfassend einen Schnelltrennungsverbinder (32), der an den Stromanschlussdrähten (24) angebracht ist.

4. Beleuchtungskörper nach Anspruch 1, wobei die gewölbte Abdeckung (14) einen durchscheinenden Ringabschnitt (22) umfasst, der über der kreisförmigen Anordnung von LEDs (18) angeordnet ist, um eine verbesserte Lichtstreuung von den LEDs bereitzustellen.

5. Beleuchtungskörper nach Anspruch 1, ferner umfassend eine wasserdichte Dichtung (28), die zwischen der Metallbasis (12) und der gewölbten Abdeckung (14) angeordnet ist.

6. Beleuchtungskörper nach Anspruch 1, wobei die Metallbasis (12) kreisförmig ist.

## Revendications

1. Appareil d'éclairage (10) conçu pour être fixé à une boîte de jonction de plafonnier standard, l'appareil d'éclairage comprenant :
une base métallique (12) possédant une configuration de trous qui correspond à une configuration de trous de vis de montage de la boîte de jonction de plafonnier standard ;
une carte de circuit imprimé (16) fixée à une surface inférieure de la base métallique ; un réseau circulaire de DEL (18) fixé sur un périmètre extérieur de la carte de circuit imprimé ; et
un couvercle bombé (14) fixé sur la surface inférieure de la base métallique (12) et recouvrant la carte de circuit imprimé (16) et le réseau circulaire de DEL (18), le couvercle bombé (14) étant moulé à partir de plastique transparent à travers lequel la lumière provenant des DEL peut passer, le couvercle bombé (14) étant traversé par des ouvertures qui sont alignées avec la configuration de trous dans la base métallique (12), les ouvertures permettant de recevoir des vis de montage qui fixent le luminaire sur la boîte de jonction de plafonnier standard.

2. Appareil d'éclairage selon la revendication 1, comprenant en outre des fils de borne d'alimentation (24) s'étendant depuis la surface supérieure de la base métallique (12), les fils de borne d'alimentation permettant de se connecter aux fils de câble d'alimentation en CA.

3. Appareil d'éclairage selon la revendication 2, comprenant en outre un connecteur à déconnexion rapide (32) fixé sur les fils de borne d'alimentation (24).

4. Appareil d'éclairage selon la revendication 1, ledit couvercle bombé (14) comprenant une partie annulaire translucide (22) disposée sur le réseau circulaire de DEL (18) pour fournir une meilleure dispersion de la lumière provenant des DEL.

5. Appareil d'éclairage selon la revendication 1, comprenant en outre une garniture étanche à l'eau (28) disposée entre la base métallique (12) et le couvercle bombé (14).

6. Appareil d'éclairage selon la revendication 1, ladite base métallique (12) étant circulaire.
